# EUROPÄISCHE PATENTSCHRIFT

(11) **EP 1 427 582 B1**
(45) Veröffentlichungstag und Bekanntmachung des Hinweises auf die Patenterteilung: **10.05.2006**
(21) Anmeldenummer: 02776974.4
(22) Anmeldetag: 03.09.2002
(51) Int. Cl.: B30B 9/12, B01D 29/84, B01D 29/64

(54) **PRESSE ZUR ENTFEUCHTUNG VON FEUCHTGUT, INSBESONDERE RESTMÜLL**
PRESS FOR DEWATERING A HUMID SUBSTANCE, IN PARTICULAR RESIDUAL REFUSE
PRESSE POUR DESHYDRATER UNE SUBSTANCE HUMIDE, EN PARTICULIER DES DECHETS RESIDUELS

(30) Priorität: 03.09.2001 DE 10143004
(43) Veröffentlichungstag der Anmeldung: 16.06.2004
(73) Patentinhaber: Widmer, Christian, 4102 Binningen (CH)
(72) Erfinder: WIDMER, Christian, CH-4102 Binningen (CH); HARTMANN, Rudolf, CH-4460 Gelterkinden (CH)
(74) Vertreter: Polte, Willi
(86) Internationale Anmeldenummer: PCT/EP2002/009852
(87) Internationale Veröffentlichungsnummer: WO 2003/020498

(56) Entgegenhaltungen:
- DE-A- 19 909 328
- FR-A- 2 077 817
- US-A- 3 230 865
- US-A- 3 938 434
- PATENT ABSTRACTS OF JAPAN vol. 009, no. 319 (M-439), 14. Dezember 1985 (1985-12-14) & JP 60 152395 A (YAMATO SANGYO KK), 10. August 1985 (1985-08-10)
- PATENT ABSTRACTS OF JAPAN vol. 1998, no. 09, 31. Juli 1998 (1998-07-31) & JP 10 099609 A (ARAI TEKKOSHO:KK), 21. April 1998 (1998-04-21)
- PATENT ABSTRACTS OF JAPAN vol. 008, no. 234 (M-334), 26. Oktober 1984 (1984-10-26) & JP 59 113997 A (MASAKATSU OZAWA), 30. Juni 1984 (1984-06-30)
- PATENT ABSTRACTS OF JAPAN vol. 2000, no. 24, 11. Mai 2001 (2001-05-11) & JP 2001 205489 A (KATABE TOYOKAZU), 31. Juli 2001 (2001-07-31)

## Beschreibung

Die Erfindung betrifft eine Presse zur Entfeuchtung von Feuchtgut, insbesondere von Restmüll gemäß dem Oberbegriff des Patentanspruchs 1.

In der DE 199 09 328 A1 ist ein Verfahren zur Aufbereitung von Restmüll beschrieben, bei dem mechanisch aufbereiteter Restmüll durch eine aerobe Hydrolyse biologisch stabilisiert wird. Bei einer derartigen aeroben Hydrolyse wird dem zu behandelnden Restmüll Wasser und Luft im Gegenstrom zugeführt, so dass durch Zusammenwirken der Luft und der Auswaschflüssigkeit organische Zellen des Restmülls aufgebrochen und Zellwasser freigesetzt wird. Der verfügbare Kohlenstoff wird zu Kohlendioxid abgebaut und die gelöste und angesäuerte Organik durch die Auswaschflüssigkeit und auch teilweise durch die Luft abtransportiert. Durch diese aerobe Hydrolyse wird praktisch ein Deponieverfahren in Zeitraffer durchgeführt.

Der derart biologisch stabilisierte Restmüll hat einen relativ geringen Trockensubstanzanteil, so dass sich an diese Hydrolyse eine Entwässerung anschließen muss. Bei der in der DE 199 09 328 A1 bekannten Lösung erfolgt diese Entwässerung durch eine Hochdruckpresse, beispielsweise eine Extruderpresse. Bei einer derartigen Extruderpresse wird der zu entwässernde Restmüll über eine Schnecke eingezogen, kompaktiert und das ausgepresste Wasser abgeführt.

In der US-A-3230865 ist eine Presse zur Entfeuchtung von Feuchtgut offenbart, bei der das von einer Schnecke von einem Materialeinzug zu einem Materialaustrag transportierte Feuchtgut im Bereich des Materialaustrags mit einem gasförmigen Trocknungsmedium beaufschlagbar ist. Durch Zuführung des Trocknungsmediums ist im Schneckenschaft eine Längsbohrung ausgebildet, die mit ihrem einen Endabschnitt mit einer Druckerzeugungseinrichtung in Verbindung steht und an deren anderem Endabschnitt eine Vielzahl von den Schneckenschaft durchsetzende radiale Bohrungen ausgebildet sind.

Es zeigte sich, dass der Trockensubstanzgehalt des auf diese Weise entwässerten Restmülls noch relativ niedrig ist, so dass ein vergleichsweise hoher Aufwand zur Nachtrocknung des Restmülls erforderlich ist.

Demgegenüber liegt der Erfindung die Aufgabe zugrunde, eine Presse zur Entfeuchtung von Feuchtgut zu schaffen, bei der der Aufwand zur Nachtrocknung verringert ist.

Diese Aufgabe wird durch eine Presse mit den Merkmalen des Patentanspruchs 1 gelöst.

Die Presse hat eine Schnecke, über die das Feuchtgut von einem Einzug zu einem Materialaustrag transportierbar und komprimierbar ist. Zusätzlich zu dieser mechanischen Komprimierung wird das Feuchtgut noch mit Druckluft oder Vakuum beaufschlagt, über die eine weitere Entfeuchtung des Feuchtgutes erfolgt. Das heißt, es wird eine mechanische Entwässerung von einer Entwässerung durch Konvektion oder einer Entwässerung durch Vakuum überlagert. Es wird jedoch bevorzugt, wenn die Entwässerung im wesentlichen durch die Druckluftbeaufschlagung erfolgt.

Erfindungsgemäß wird das Trocknungsmedium über ein von der Schnecke umgriffenes lanzenförmiges Zentralrohr zugeführt, das an einem Endabschnitt mit Austrittsdüsen für das Trocknungsmedium ausgebildet ist. Das Feuchtgut wird dann etwa quer zur Längsachse der Schnecke vom Trocknungsmedium durchströmt. Das Zentralrohr ist drehfest gelagert.

Es zeigte sich bei Vorversuchen, dass sich durch diese Variante der Trockensubstanzgehalt des zu behandelnden Feuchtgutes ohne Nachtrocknung gegenüber den herkömmlichen Lösungen wesentlich erhöhen lässt, wobei bei der Behandlung von Restmüll Trockensubstanzgehalte von bis zu 70% erzielbar sind. Ein wesentlicher Vorteil dieser Einrichtung besteht darin, dass durch die parallele Beaufschlagung mit einem Trocknungsmedium (Trocknungsluft) oder mit Vakuum der vorrichtungstechnische Aufwand zur Herstellung der Presse nur unwesentlich erhöht wird, da die erforderlichen Pumpen, Rohrleitungen, etc. mit wenig Aufwand zu installieren sind.

Die Abführung des beladenen Trocknungsmediums ist besonders einfach, wenn etwa im Bereich der Austrittsdüsen am Gehäuse der Schnecke ein Siebkorb oder eine ähnliche Einrichtung vorgesehen ist, die den zu behandelnden Restmüll zurückhält und den Durchtritt des beladenen Trocknungsmediums ermöglicht.

Die Strömungsführung des Trocknungsmediums ist besonders einfach, wenn der Abzug des beladenen Trocknungsmediums durch Unterstützung mittels des Unterdrucks erfolgt.

Bei einer derartigen Unterdrucklösung wird stromabwärts des Siebkorbs ein Kondensator vorgesehen, über den die ausgetragene Feuchtigkeit kondensiert werden kann.

Zur Einstellung des mechanischen, über die Schnecke aufgebrachten Pressdrucks kann an einem Materialaustrag der Presse eine Stau- oder Gegendruckeinrichtung vorgesehen werden, so dass - je nach Konsistenz des zu behandelnden Feuchtgutes - unterschiedliche Staudrucke einstellbar sind.

Bei einer erfindungsgemäßen Variante zur Behandlung von Restmüll wird das Trocknungsmedium mit einem Druck zugeführt, der etwa 1 bar über dem Druck am Materialaustrag liegt, während im Abzugsbereich ein geringer Unterdruck angelegt wird.

Sonstige vorteilhafte Weiterbilungen der Erfindung sind Gegenstand der weiteren Unteransprüche.

Im folgenden wird ein bevorzugtes Ausführungsbeispiel der Erfindung anhand schematischer Zeichnungen näher erläutert. Es zeigen:
Fig. 1 einen Längsschnitt durch eine erfindungsgemäße Presse zur Entfeuchtung von Restmüll und
Fig. 2 einen schematischen Querschnitt durch die Presse aus Fig. 1.

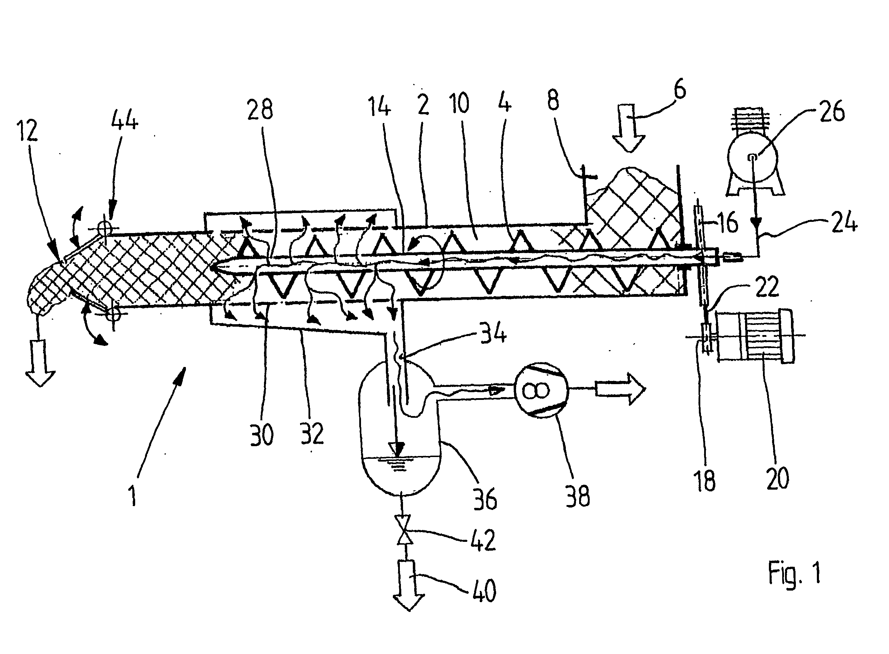

Die in Fig. 1 dargestelle Presse 1 hat ein Schneckengehäuse 2, in dem eine Schnecke 4 drehbar gelagert ist. Durch diese Schnecke 4 lässt sich Restmüll 6 über einen Materialeinzug 8 in einen Schneckenraum 10 einziehen und zu einem Materialaustrag 12 transportieren. Durch geeignete Steigung der Schneckenwendel wird der feuchte, das heißt mit Wasser beladene Restmüll 6 komprimiert und dabei Wasser ausgepresst.

Die Schnecke 4 hat ein lanzenförmiges Zentralrohr 14, an dessen Außenumfang die Schneckenwendel befestigt sind. Das Zentralrohr 14 ragt mit einem Endabschnitt aus dem Schneckengehäuse 2 hervor. Dieser Endabschnitt trägt ein Antriebsritzel 16, das in Wirkverbindung mit einem Ausgangsrad 18 eines Antriebsmotors 20 steht. Bei dem dargestellten Ausführungsbeispiel sind das Antriebsritzel 16 und das Ausgangsrad 18 über einen Riemen oder eine Kette 22 miteinander verbunden.

Der aus dem Schneckengehäuse 2 vorstehende Endabschnitt des Zentralrohrs 14 ist über eine Druckleitung 24 mit einem Druckluftkompressor 26 verbunden, so dass Druckluft in das Innere des Zentralrohrs 14 einblasbar ist.

An dem in Fig. 1 linken Endabschnitt des Zentralrohrs 14 sind eine Vielzahl von Austrittsdüsen 28 ausgebildet, durch die hindurch die Druckluft aus dem Zentralrohr 14 austreten kann. Diese Austrittsdüsen 28 sind bei dem in Fig. 1 dargestellten Ausführungsbeispiel lediglich entlang eines Endabschnittes des Zentralrohrs 14 ausgebildet prinzipiell ist es jedoch möglich, diese Austrittsdüsen über die gesamte Länge des Zentralrohrs vorzusehen. Durch die in Fig. 1 gewählte Lösung ist gewährleistet, dass die Druckluft in einem Bereich in den Schneckenraum 10 eintritt, in dem der Restmüll bereits in komprimierter Form vorliegt.

Etwa radial gegenüberliegend zu den Austrittsdüsen 28 ist an der Umfangswandung des Schneckengehäuses 2 ein Siebkorb 30 ausgebildet, der von einem Vakuumkasten 32 umgriffen ist. Dieser Vakuumkasten 32 hat einen Saugstutzen 34 der in einem Kondensator 36 mündet. An den Gasraum des Kondensators 36 ist eine Vakuumpumpe 38 angeschlossen, über die der Vakuumkasten 32 und der Kondensator 36 mit einem Unterdruck, von beispielsweise 0,9 bar beaufschlagbar ist. Das Kondensat 40 kann über eine Ventileinrichtung 42 abgezogen und einer weiteren Verarbeitung zugeführt werden.

An dem in Fig. 1 linken Endabschnitt des Schneckengehäuses 2 ist eine Staudruckeinrichtung 44 vorgesehen, über die praktisch der Durchmesser einer Austrittsdüse des Materialaustrags 12 veränderbar und somit ein einer Axialverschiebung des Restmülls entgegenwirkender Gegendruck im Schneckengehäuse 2 aufbaubar ist.

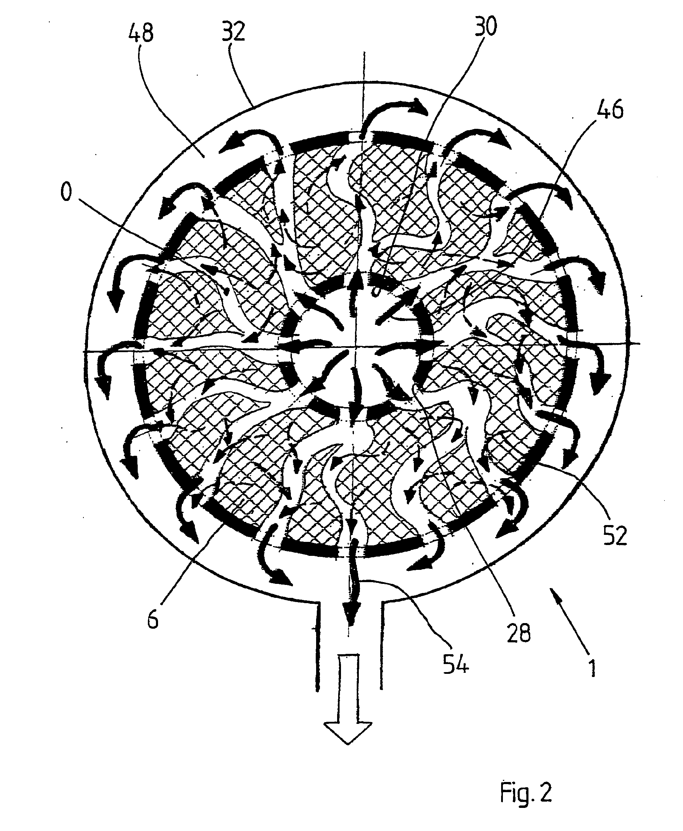

Der zu entwässernde Restmüll 6 wird durch die rotierende Schnecke 4 in den Schneckenraum 10 eingezogen und in der Darstellung gemäß Fig. 1 nach links in den vom Vakuumkasten 32 umgriffenen Bereich transportiert und dabei teilweise komprimiert. In das drehende Zentralrohr 14 der Schnecke 4 wird über den Druckluftkompressor 26 Druckluft mit einem vorbestimmten Überdruck eingeblasen, der beispielsweise um ca. 3 bar oberhalb des über die Staudruckeinrichtung 44 aufgebrachten Druckes liegt. Gemäß Fig. 2, die einen Querschnitt durch die Presse 1 in Fig. 1 zeigt, tritt die unbeladene Druckluft 46 durch die Austrittsdüsen 28 des Siebkorbs 30 in Radialrichtung aus dem Zentralrohr 14 aus und trifft auf den zu entwässernden Restmüll. An den vom Vakuumkasten 32 umgriffenen Ringraum 48 ist über die Vakuumpumpe 38 ein Unterdruck angelegt, so dass die Druckluft aufgrund der Druckdifferenz (Druck der vom Kompressor 26 gelieferten Druckluft - Unterdruck der Vakuumpumpe 38) in Radialrichtung, das heißt quer zur Achse der Schnecke 4 den Restmüll 6 durchströmt. Durch diese vergleichsweise große Druckdifferenz bilden sich innerhalb des Restmülls 6 Strömungskanäle 50, deren Verlauf sich jedoch ständig ändert. Durch diese Druckluftströmung und die mechanische Kompression des Restmülls über die Schnecke 4 wird dem Restmüll 6 Wasser 52 entzogen und mit der Druckluft 46 in den Vakuumkasten 48 transportiert. Die mit Wasser beladene Druckluft 54 tritt dann in Pfeilrichtung in den Kondensator 36 ein und wird dort in der vorbeschriebenen Weise kondensiert. Der über den Materialaustrag austretende Anteil der Druckluft ist vernachlässigbar.

Mit der vorbeschriebenen Presse 1 lässt sich bei der Behandlung von organische Bestandteile enthaltendem Restmüll ein Trockensubstanzgehalt von 60-70% einstellen, so dass der Aufwand zur Nachtrocknung des Restmülls gegenüber herkömmlichen Lösungen minimal ist.

Bei dem vorbeschriebenen Ausführungsbeispiel sind die Schneckenwendel am Außenumfang des Zentralrohrs 14 befestigt. Prinzipiell könnte das Zentralrohr auch drehfest im Schneckengehäuse 2 gelagert sein und die drehbar angetriebene Schnecke in Axialrichtung durchsetzen.

Selbstverständlich kann die vorbeschriebene Presse 1 auch zur Entfeuchtung anderen Feuchtgutes eingesetzt werden.

Bei bestimmten Betriebsbedingungen kann es ausreichend sein, wenn die Presse 1 nur mit Druckluft oder nur mit Vakuum betrieben wird.

Offenbart ist eine Presse zur Entfeuchtung von Feuchtgut, insbesondere von Restmüll, mit einer Schnecke, über die der Restmüll mechanisch komprimierbar ist. Das Feuchtgut wird während des Transports mittels der Schnecke mit einem Trocknungsmedium, vorzugsweise mit Druckluft oder mit vakuum beaufschlagt, so dass die aus der Presse abgeführt wird.

### Bezugszeichenliste

- 1: Presse
- 2: Schneckengehäuse
- 4: Schnecke
- 6: Restmüll
- 8: Materialeinzug
- 10: Schneckenraum
- 12: Materialaustrag
- 14: Zentralrohr
- 16: Antriebsritzel
- 18: Ausgangsrad
- 20: Antriebsmotor
- 22: Kette
- 24: Druckleitung
- 26: Druckluftkompressor
- 28: Austrittsdüsen
- 30: Siebkorb
- 32: Vakuumkasten
- 34: Saugstutzen
- 36: Kondensator
- 38: Vakuumpumpe
- 40: Kondensat
- 42: Ventileinrichtung
- 44: Staudruckeinrichtung
- 46: Druckluft
- 48: Ringraum
- 50: Strömungskanal
- 52: Wasser
- 54: beladene Druckluft

## Patentansprüche

1. Presse zur Entfeuchtung von Feuchtgut, insbesondere von Restmüll, mit einer Schnecke (4), über die das Feuchtgut (6) von einem Materialeinzug (8) zu einem Materialaustrag (12) transportierbar ist und dabei zur Entfeuchtung komprimiert wird, mit einer Einrichtung, über die das mittels der Schnecke (4) komprimierte Feuchtgut (6) mit einem Trocknungsmedium, vorzugsweise Druckluft (46) oder mit Vakuum derart beaufschlagbar ist, dass das Feuchtgut (6) vom Trocknungsmedium durchströmt und die Feuchte abführbar ist, **dadurch gekennzeichnet, dass** die Einrichtung ein von der Schnecke (4) umgriffenes Zentralrohr (14) hat, das mit Austrittsdüsen (28) für das Trocknungsmedium (46) ausgebildet ist, wobei das Zentralrohr (14) drehfest gelagert ist.

2. Presse nach Patentanspruch 1, wobei ein Schneckengehäuse (2) im Bereich der Austrittsdüsen (28) mit einem Siebkorb (30) ausgeführt ist, über den das beladene Trocknungsmedium (54) abführbar ist.

3. Presse nach einem der vorhergehenden Patentansprüche, mit einer Vakuumpumpe (38), über die ein Unterdruck zum Abführen des beladenen Trocknungsmediums (54) anlegbar ist.

4. Presse nach Patentanspruch 2 oder 3, wobei stromabwärts des Siebkorbs (30) ein Kondensator (36) zum Kondensieren der mit dem Trocknungsmedium (54) ausgetragenen Feuchte vorgesehen ist, wobei an den Kondensator (36) die Vakuumpumpe (38) angeschlossen ist.

5. Presse nach einem der vorhergehenden Patentansprüche, mit einer Staudruckeinrichtung (44) zum Einstellen eines Staudruck im Bereich des Materialaustrags (12).

6. Presse nach einem der vorhergehenden Patentansprüche, wobei das Trocknungsmedium (46) das Feuchtgut (6) etwa in Querrichtung zur Schneckenachse durchströmt.

7. Presse nach einem der vorhergehenden Patentansprüche, wobei das Trocknungsmedium (46) mit einem Überdruck zugeführt ist, der um ca. 1 bar oberhalb des Druckes im Bereich des Materialaustrags liegt.

## Claims

1. A press for the dehumidification of humid matter, in particular of residual waste, which comprises a worm gear (4) whereby said humid matter (6) may be transported from a material drawing-in device (8) to a material discharge (12) and is concurrently compressed for the dehumidification, comprising a means whereby said humid matter (6) compressed with the aid of said worm gear (4) may be subjected to a drying medium, preferably pressurized air (46), or to vacuum, so that drying medium flows through said humid matter (6) and the humidity may be transported off, **characterized in that** said means includes a central tube (14) encompassed by said worm gear (4) and designed to include outlet nozzles (28) for said drying medium (46), wherein said central tube (14) is mounted to be non-rotary.

2. The press in accordance with Claim 1, wherein a worm gear housing (2) is designed to include in the range of said outlet nozzles (28) a strainer basket (30) through which said freighted drying medium (54) may be transported off.

3. The press in accordance with any one of the foregoing claims, including a vacuum pump (38) through which a reduced pressure for transporting off said freighted drying medium (54) may be applied.

4. The press in accordance with Claim 2 or 3, wherein downstream of said strainer basket (30) a condenser (36) for condensing the humidity transported off jointly with said drying medium (54) is provided, wherein said vacuum pump (38) is connected to said condenser (36).

5. The press in accordance with any one of the foregoing claims, including a backup pressure means (44) for adjusting a backup pressure in the range of said material discharge (12).

6. The press in accordance with any one of the foregoing claims, wherein said drying medium (46) flows through said humid matter (6) approximately in a direction transverse to the worm gear axis.

7. The press in accordance with any one of the foregoing claims, wherein said drying medium (46) is supplied at an excess pressure which is approximately by 1 bar higher than the pressure in the range of the material discharge.

## Revendications

1. Presse pour déshydrater une substance humide, en particulier des déchets résiduels avec une vis sans fin (4), au moyen de laquelle la substance humide (6) peut être transportée depuis une entrée de matériau (8) jusqu'à une sortie de matériau (12) en étant simultanément comprimée pour assurer la déshydratation, et avec un dispositif, par l'intermédiaire duquel la substance humide (6) comprimée au moyen de la vis sans fin (4) peut être soumise de telle façon à un fluide de séchage, de préférence de l'air comprimé (46), ou à un vide de sorte que la substance humide (6) soit traversée par le fluide de séchage et que l'humidité puisse être évacuée, **caractérisée en ce que** le dispositif comprend un tube central (14) qui est entouré par la vis sans fin (4) et qui est configuré avec des buses de sortie (28) pour le fluide de séchage (46), le tube central (14) étant logé de manière fixe en rotation.

2. Presse selon la revendication 1, **caractérisée en ce qu'**un carter de vis sans fin (2) est configuré dans la zone des buses de sortie (28) avec un panier de filtrage (30), par l'intermédiaire duquel le fluide de séchage chargé (54) peut être évacué.

3. Presse selon l'une quelconque des revendications précédentes avec une pompe à vide (38), au moyen de laquelle peut être créé un vide servant à évacuer le fluide de séchage chargé (54).

4. Presse selon la revendication 2 ou 3, **caractérisée en ce qu'**en aval du flux par rapport au panier de filtrage (30) est prévu un condenseur (36) servant à condenser l'humidité évacuée au moyen du fluide de séchage (54), la pompe à vide (38) étant raccordée au condenseur (36).

5. Presse selon l'une quelconque des revendications précédentes avec un dispositif de pression de refoulement (44) servant à établir une pression de refoulement dans la zone de la sortie de matériau (12).

6. Presse selon l'une quelconque des revendications précédentes, **caractérisée en ce que** le fluide de séchage (46) traverse la substance humide (6) à peu près en direction transversale par rapport à l'axe de la vis sans fin.

7. Presse selon l'une quelconque des revendications précédentes, **caractérisée en ce que** le fluide de séchage (46) est amené avec une surpression qui se situe à environ 1 bar au-dessus de la pression régnant dans la zone de la sortie de matériau.
